# EUROPEAN PATENT SPECIFICATION

(11) **EP 1 630 890 B1**
(45) Date of publication and mention of the grant of the patent: **10.09.2008**
(21) Application number: 05252135.8
(22) Date of filing: 05.04.2005
(51) Int. Cl.: H01M 2/16, H01M 8/10, C08J 5/24, C08J 5/04, B01D 67/00, B01D 69/10, B01D 71/40

(54) **Polymer electrolyte membrane and fuel cell employing the same**
Polymerelektrolytmembran und diese enthaltende Brennstoffzelle
Membrane à électrolyte polymère et pile à combustible la contenant

(30) Priority: 31.08.2004 KR 2004069091
(43) Date of publication of application: 01.03.2006
(73) Proprietor: Samsung SDI Co., Ltd., Suwon-si, Gyeonggi-do (KR)
(72) Inventor: Cho, Myung-dong, 104-1801 Sinyeongtong Hyundai, Hwaseong-si Gyeonggi-do (KR); Sun, Hee-young, 206-402 Taeyoung Apt., Yongin-si Gyeonggi-do (KR); Lee, Myung-jin, Yongin-si Gyeonggi-do (KR)
(74) Representative: Kyle, Diana

(56) References cited:
- EP-A- 1 238 999
- US-A- 5 985 942
- US-A1- 2002 045 085
- US-A1- 2002 156 142

## Description

The present invention relates to a polymer electrolyte membrane and a fuel cell employing the same, and more particularly, a polymer electrolyte membrane having excellent thermal property and mechanical stability, and a fuel cell employing the same.

A fuel cell is a device that electrochemically reacts a fuel with oxygen to generate electric energy. A fuel cell can be applied in providing electric power for a small electric/electronic product, particularly a portable device as well as in providing electric power for industry, household and vehicle driving.

The fuel cell can be classified, depending on the type of the electrolyte to be used, into PEMFC (polymer electrolyte membrane fuel cell), PAFC (phosphoric acid fuel cell), MCFC (molten carbonate fuel cell), and SOFC (solid oxide fuel cell), etc. The operating temperature of the fuel cell and the material of its component vary depending on the electrolyte to be used.

The fuel cell can be classified, depending on the fuel feeding ways, into an exterior reforming type that converts a fuel to a hydrogen enriched gas through a fuel reformer, a direct fuel feeding type that directly feeds a fuel in a gas or a liquid state to an anode, or an interior reforming type.

The representative example of the direct fuel feeding type is a DMFC (direct methanol fuel cell). The DMFC, in general, uses an aqueous methanol solution as a fuel, and a hydrogen ion conducting polymer electrolyte membrane as an electrolyte. Accordingly, the DMFC also belongs to the PEMFC.

Although the PEMFC is small and light, it can provide high output density. Furthermore, by using the PEMFC, a system for generating electricity becomes simple to construct.

The basic structure of the PEMFC typically comprises an anode (fuel electrode), a cathode (oxidant electrode), and a polymer electrolyte membrane placed between the anode and the cathode. The anode of the PEMFC is provided with a catalyst layer to promote oxidation of a fuel, and the cathode of the PEMFC is provided with a catalyst layer to promote reduction of the oxidant.

The fuel fed to the anode of the PEMFC typically includes hydrogen, hydrogen-containing gas, mixed vapor of steam and methanol, and aqueous methanol solution, etc. The oxidant fed to the cathode of the PEMFC typically includes oxygen, oxygen-containing gas or air.

At the anode of the PEMFC, a fuel is oxidized to form a hydrogen ion and an electron. The hydrogen ion is transferred to the cathode through an electrolyte membrane, and the electron is transferred to an outer circuit (load) through a wire (or a collector). At the cathode of the PEMFC, the hydrogen ion transferred through the electrolyte membrane, the electron transferred from the outer circuit through a wire (or a collector), and oxygen are combined to form water. Herein, the movement of the electron gone through the anode, the outer circuit and the cathode is just electric power.

In the PEMFC, the polymer electrolyte membrane plays not only a role as an ion conductor to transfer a hydrogen ion from the anode to cathode, but also a role as a separator to block the mechanical contact of the anode and the cathode. Accordingly, the properties required for the polymer electrolyte membrane are excellent ion conductivity, electrochemical stability, strong mechanical strength, thermal stability at operating temperature, easy thin film making, etc.

The material of the polymer electrolyte membrane generally includes a polymer electrolyte such as a sulfonate perfluorinated polymer (e.g., Nafion: trademark of Du Pont company) having a backbone consisting of a fluorinated alkylene, and a side chain consisting of a fluorinated vinyl ether having a sulfonic acid group at the terminal end. Such a polymer electrolyte membrane contains a proper quantity of water, and thus shows excellent ion conductivity.
However, such an electrolyte membrane loses an electrolyte membrane function since its ion conductivity is seriously declined due to the loss of water by evaporation at operating temperature higher than 100°C. Accordingly, it is almost impossible to operate the PEMFC using such a polymer electrolyte membrane at atmospheric pressure and a temperature higher than 100°C. Thus, the existing PEMFC has been mostly operated at a temperature lower than 100°C, for example about 80°C.

In order to increase the operating temperature of the PEMFC to a temperature of 100°C or higher than 100°C, mounting a humidifying apparatus on the PEMFC, operating the PEMFC at pressurized condition, or using a polymer electrolyte not requiring humidification, etc. have been suggested.

When the PEMFC is operated at pressurized condition, the operating temperature can be elevated since the boiling point of water is elevated. For example, when the operating pressure of the PEMFC is 202.65 kPa (2 atm) the operating temperature can be elevated to about 120°C. However, when a pressurizing system is applied or a humidifying apparatus is mounted, not only the size and weight of the PEMFC are highly increased, but also the total efficiency of the generating system is decreased. Accordingly, in order to maximize the application range of the PEMFC, "non-humidified polymer electrolyte membrane", i.e., polymer electrolyte membrane showing excellent ion conductivity without humidifying is increasingly needed.

An example of a non-humidified polymer electrolyte membrane is disclosed in Japanese Patent Publication No. 1999-503262. In this patent, several materials, such as polybenzoimidazole, sulphuric acid or phosphoric acid doped polybenzoimidazole, etc. are described as a non-humidified polymer electrolyte.

EP-A-1,238,999 describes porous hydrophilic membranes comprising a porous inert support on which an ionomer is deposited, the membranes having high water-permeability. The membrane is prepared by a process wherein, in a first step a porous support is impregnated with a solution of an ionomer and subsequently subjected to a thermal treatment.

US 2002/045085 describes solid polymer electrolyte membranes which include a porous polymer substrate interpenetrated with an ion-conducting material.

The present invention is directed to provide a polymer electrolyte membrane having a stability at a high temperature, an excellent mechanical strength, and excellent ion conductivity even at non-humidified state, and a method of fabricating the same.

The present invention also provides a fuel cell employing the polymer electrolyte membrane, to improve a cell performance.

According to an aspect of the present invention, there is provided a polymer electrolyte membrane comprising a porous polymer matrix; and an ion conducting polymer-coating membrane formed in the outer face of a single fiber in the porous polymer matrix, wherein the ion conducting polymer is the product of polymerizing an ion conducting polymeric compound and a crosslinking agent and wherein the polymer electrolyte membrane is obtained by vacuum deposition of a micro particle coating of the ion conducting polymer on individual fibers of a porous polymer matrix to obtain a polymer electrolyte wherein the membrane sterically surrounds the circumference of the individual fibers in the polymer matrix and wherein the pores of the polymer electrolyte membrane are present after coating.

According to another aspect of the present invention, there is provided a method of preparing a polymer electrolyte membrane which comprises performing vacuum deposition of a micro particle coating on a porous polymer matrix using a composition containing an ion conducting polymeric compound and a crosslinking agent; and polymerizing the resulting product to obtain a polymer electrolyte comprising an ion conducting polymer coating membrane which sterically surrounds the circumference of the individual fibers in the polymer matrix and wherein the pores of the polymer electrolyte membrane are present after coating.

According to still another aspect of the present invention, there is provided a fuel cell including a cathode, an anode, and the polymer electrolyte membrane interposed between the cathode and the anode.

The above and other features and advantages of the present invention will become more apparent by describing in detail exemplary embodiments thereof with reference to the attached drawings in which:
FIG. 1 is an electron scanning microscopic photograph of the PTFE matrix before coating a composition according to the example 1;
FIG. 2 is an electron scanning microscopic photograph of a polymer electrolyte membrane in which an ion conducting polymer-containing coating membrane is formed on the outer face of a single fiber constituting a PTFE matrix according to the example 1;
FIG. 3 is an electron scanning microscopic photograph showing the state of which the polymer electrolyte membrane of FIG. 2 is swollen by a phosphoric acid;
FIG. 4 is a graph showing the variation in the ion conductivity depending on the quantity of the sulfonyl acrylate for the polymer electrolyte membrane obtained according to the example 1; and
FIG. 5 is a graph showing the cell performance for the fuel cell prepared according to the example 1 of the present invention.

The present invention will be described in more detail by describing embodiments thereof.

A polymer electrolyte membrane according to the present invention has a structure in which an ion conducting polymer coating membrane is formed by grafting or crosslinking a polymer matrix having excellent mechanical strength and thermal property, and an ion conducting polymeric compound having various types of ion conducting groups (particularly, hydrogen ion conducting group) on the outer face of a single fiber (or individual fiber) constituting the polymer matrix. The term "polymer electrolyte membrane" herein refers to an ion conductor comprising a polymer electrolyte matrix in which an ion medium is impregnated, and the ion medium refers to a monomer (Nafion) comprising a sulfonic acid group as a monomer to be coated in direct methanol fuel cell, and to a phosphoric acid itself in the phosphoric acid fuel cell.

The term "single fiber" herein refers to a single fiber in web form having a pore interior and three-dimensional structure in a porous polymer matrix, in other words, refers to an individual fiber or chain constituting a polymer matrix.

The polymer electrolyte membrane is useful as particularly, a high temperature operating polymer electrolyte membrane, and has excellent mechanical stability and high thermal property since it is prepared by coating an ion conducting polymer on a porous polymer matrix having a thermal stability at a temperature near 200°C.

The ion-conducting polymer is formed by polymerization of a composition comprising an ion conducting polymeric compound and a crosslinking agent.

The ion conducting polymeric compound refers to a monomer or an oligomer, which has, at its terminal end, ion conducting functional groups, such as an acid group, for example, a sulfonic acid group, a phosphoric acid group, a carboxylic acid group, an imide group, a sulfonimide group, a sulfonamide group and a hydroxy group, etc., and, at its head, a polymeric bond, for example, a double bond such as an unsaturated bond, a functional group such as an epoxy group, etc. The weight average molecular weight of such an ion conducting polymeric compound is less than about 10,000 g/mole, preferably 100 to 10,000 g/mole, and more preferably 100 to 2,000 g/mole. When the weight average molecular weight exceeds 10,000 g/mole, the conductivity of the compound can be worse.

The ion conducting polymeric compound includes an organic compound including a vinyl sulfonic acid, a styrene sulfonic acid, an acrylic compound (e.g., acrylic acid, methacrylic acid) and other strong acid.

The crosslinking agent improves the mechanical property of the polymer electrolyte membrane, and its specific example includes a hexyl acrylate, a butyl acrylate, a trimethylolpropane triacrylate (TMPTA), a poly(ethylene glycol) methacrylate (PEGMA) {H₂C=C(CH₃)-C(=O)-(OCH₂CH₂)ₙ-OH, wherein n is an integer of 1 to 25}, a poly(ethylene glycol) dimethacrylate (PEGDMA) {H₂C=C(CH₃)-C(=O)-(OCH₂CH₂)ₙ-OC(=O)-C(CH₃)=CH₂, wherein n is an integer of 1 to 25}, an allyl acrylate, a divinyl benzene, etc. The content of the crosslinking agent can be 25 to 300 parts by weight based on 100 parts by weight of the ion conducting polymeric compound. When the content of the crosslinking agent is less than 25 parts by weight, the crosslinking effect is not satisfactory. When the content of the crosslinking agent exceeds 300 parts by weight, the polymer is so excessively crosslinked that the migration of proton can be interfered, and thus the conductivity of the polymer electrolyte membrane can become lower.

The composition comprising the ion conducting polymeric compound and a crosslinking agent can further comprise a plasticizer to increase the flexibility of the polymer electrolyte membrane. The specific example of such a plasticizer includes a poly(ethylene glycol) methyl ether acrylate {CH₂=CH-C(=O)O-(CH₂CH₂O)ₘ-CH₃, wherein m is an integer of 1 to 25}, a polyallyl ether {CH₂=CH-(CH₂CH₂O)ₘ-CH₃, wherein m is an integer of 1 to 25}, etc.

The content of the plasticizer can be 0 to 200 parts by weight based on 100 parts by weight of the ion conducting polymeric compound. When the quantity of the plasticizer exceeds 200 parts by weight, the mechanical property of the composition can become worse.

A porous polymer matrix constituting the polymer electrolyte membrane according to the present invention is a porous substrate made of at least one selected from the group consisting of a polytetrafluoroethylene (PTFE), a polyvinylidenefluoride (PVDF), a polypropylene (PP) and a polyethylene (PE). The thickness of the substrate is 20 to 150 µm, and the porosity of the substrate is 30 to 90%. When the porosity is less than 30%, the quantity of the coated ionomer can be decreased, and its conductivity can be worse. When the porosity exceeds 90%, the conductivity can be better, however, the mechanical property can be relatively worse.

When the porous polymer matrix made of a PTFE is used, it is useful in a polymer electrolyte type fuel cell for using at high temperature. When the hydrophobic porous polymer matrix, such as a PVDF, PP, etc., is used, it is useful in a direct methanol fuel cell in which the methanol crossover is decreased.

In the polymer electrolyte membrane according to the present invention, the thickness of the ion conducting polymer coating membrane formed on outer face of a single fiber can be 1 to 3 µm. Preferably, the thickness of the coating on both side of membrane comprising the ion-conducting polymer formed on the outer face of the single fiber is 1 to 3 *µ*m. When the thickness of the coating membrane is less than 1 *µ*m, the quantity of the coated ionomer can be insufficient, and thus the ion conductivity of the membrane can be lower. When the thickness exceeds 3 µm, the electrolyte membrane can block pores, thereby to lower the conductivity and result in low physical properties.

Hereinafter, the method of preparing the polymer electrolyte membrane according to the present invention will be described in detail.

The micro particle coating is performed on a porous polymer matrix by using a composition comprising an ion conducting polymeric compound and a crosslinking agent. Such micro particle coating method is not particularly limited, and its specific example includes the chemical vapor deposition(CVD) and PVD(physical vapor deposition). Also, the composition can be coated on only one side of the porous polymer matrix, or coated on both sides.

The coating method employing the flash evaporation will be more detail, as follows.

A monomer is sublimed at high temperature and ultra low pressure, and sprayed transiently on a substrate to coat on a pore and its surface. The thickness of the coated membrane is controlled by controlling the quantity of the mixed monomers. This coating method is disclosed in US Patent No. 6,468,595. In the present invention, this coating method is used.

After micro particle coating as described above, the reaction of polymerizing the composition is performed to obtain a polymer electrolyte membrane in which a coating membrane made of an ion-conducting polymer is formed on the outer face of a single fiber in the porous polymer matrix. The micro particle coating method is vacuum deposition coating.

The polymerization reaction can be achieved by light, heat or electron beam. As for light, UV light, etc. is employed, and as for heat, a temperature of 70 to 350°C is employed. Through such polymerization, the crosslinking reaction of an ion conducting polymeric compound and a crosslinking agent, and a grafting reaction, etc. are occurred, thereby forming a corresponding ion conducting polymer. As described above, the composition can further comprise a plasticizer.

By providing a cathode, an anode, and the above-describe polymer electrolyte membrane interposed between the cathode and the anode, the fuel cell according to the present invention can be obtained.

The present invention will be described in more detail with reference to the following examples.

### Examples

### Example 1

Compositions of a sulfonyl acrylate (CH₂=CH-C(=O)O-SO₃H) and a PEGDA in the weight ratio described in Table 1 below were prepared, and were subjected to flash evaporation on a polyvinylidenefluoride (PVDF) matrix, a polytetrafluoroethylene (PTFE) matrix, or the Celgard matrix (polyethylene matrix), respectively, and then were irradiated with UV for 10 minutes to perform polymerization reaction. Thus, the polymer electrolyte membranes in which the proton conducting polymers of a vinyl sulfonic acid and a PEGDA are coated on the single fibers in the polyvinylidenefluoride matrix were completed.
Meanwhile, an electrode, EFCG-S type available in E-TEK Company, with a loading of 0.6 mg/cm², on which 10 wt% of platinums are supported on Toray carbon paper TGPH900, was used as for an electrode. For impregnation on the electrode with a phosphoric acid, the electrode was soaked with a phosphoric acid, and then stored at 120°C for 1 hour under vacuum.

By providing the electrode and the above described polymer electrolyte membrane, a fuel cell was completed.

**Table 1**

| No | Sulfonyl acrylate (parts by weight) | PEGDA (parts by weight) |
|---|---|---|
| 1 | 100 | 0 |
| 2 | 80 | 20 |
| 3 | 50 | 50 |
| 4 | 30 | 70 |

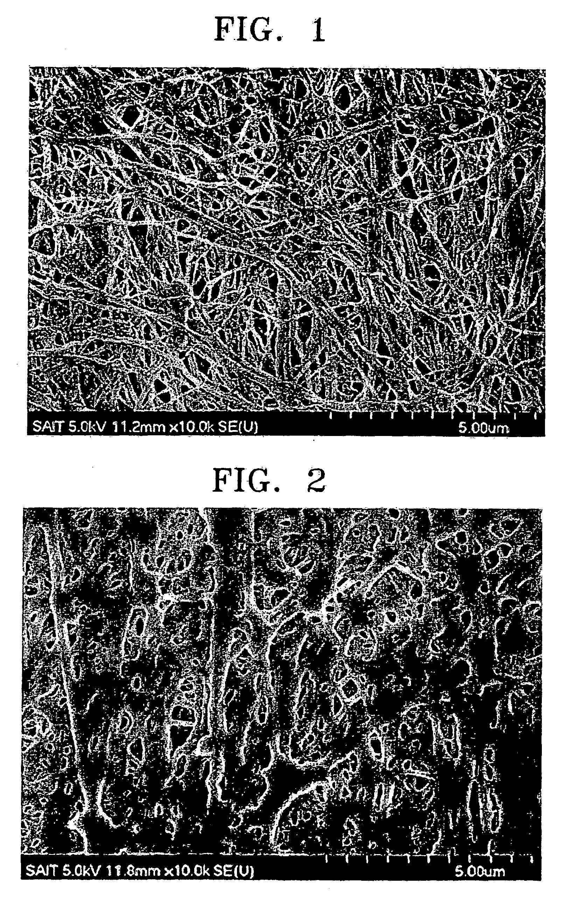

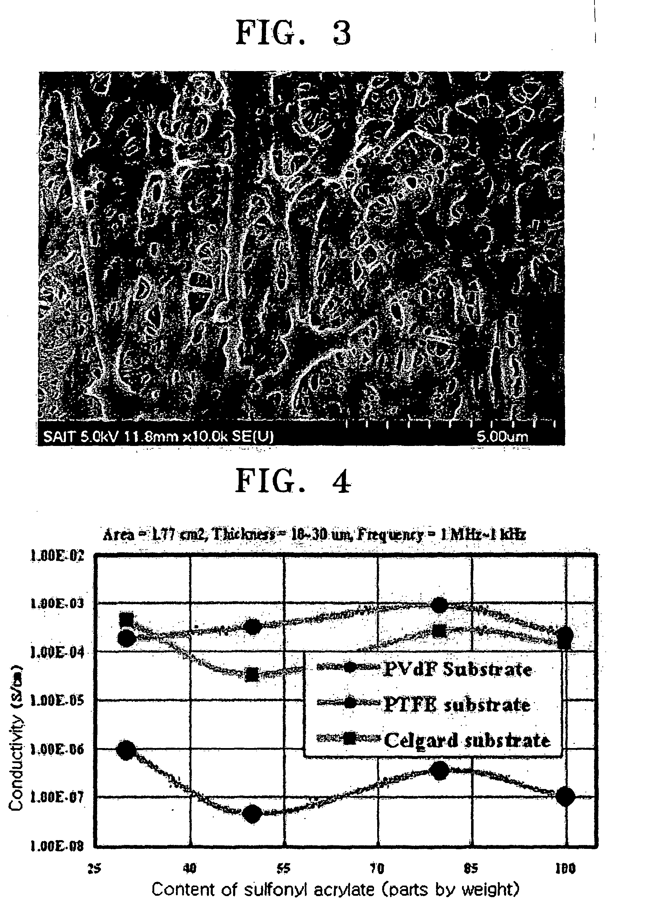

FIG. 1 is an electron scanning microscopic photograph (X 10,000 magnification) of the PTFE matrix before coating a composition according to the example 1. FIG. 2 shows an electron scanning microscopic photograph (X 10,000 magnification) of a polymer electrolyte membrane in which an ion conducting polymer-containing coating membrane is formed on the outer face of a single fiber constituting a PTFE matrix, by coating a composition that comprises 30 parts by weight of a sulfonyl acrylate and 70 parts by weight of a PEGDA according to the example 1. FIG. 3 is an electron scanning microscopic photograph showing the state of which the polymer electrolyte membrane of FIG. 2 is swollen by a phosphoric acid.

Comparing FIG. 1 and FIG. 2, it was found that, according to the example 1, the coating membrane was formed in a thickness of about 1 *µ*m in order to sterically surround the circumference of the single fiber constituting the PTFE matrix. Further, if it can be confirmed that the coating is performed on each fiber of the polymer by coating the polymer on the porous polymer matrix, the pores are present even after coating. Accordingly, the polymer coating provides a medium through which the coated ionomer is swollen to ensure the proton path on migration of proton since the polymer is coated three-dimensionally even on the interior of the polymer membrane, not simply on the surface. However, the polymer coating can also provide the effect of preventing from blocking gases.

Referring to FIG. 3, it was found that the swollen electrolyte membrane could fill effectively the existing pores due to the swelling of the polymer to form a polymer membrane in pinhole free state.

For the polymer electrolyte membrane obtained according to the example 1, the variation in the ion conductivity depending on the content of the sulfonyl acrylate was examined, and the results are shown in FIG. 4. For measuring the ion conductivity herein, the membrane was impregnated in 85% phosphoric acid for 1 hour at a room temperature, and then was examined.

Referring to FIG. 4, it was found that when the PTFE matrix was used, the ion conductivity was most excellent.

Further, for a fuel cell prepared according to the example 1 (using the PTFE matrix as a substrate), the cell performance was examined. As for the evaluation condition of the cell performance herein, the flow rate of hydrogen gas was about 100 Mℓ/min, and the flow rate of air was about 300 Mℓ/min, and the variation in the electric potentials of the cell depending on the electric current density was examined at non-humidified condition.

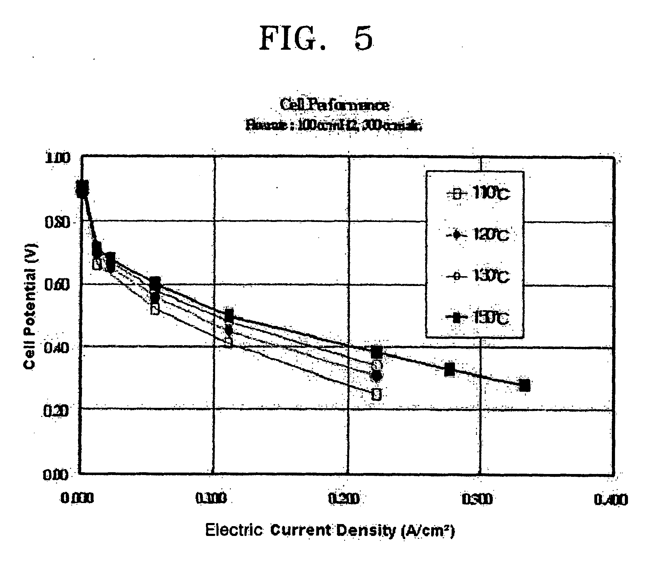

The evaluation results of the cell performance described above are shown in FIG. 5.

Referring to FIG. 5, on measuring the voltage per temperature at 0.2 A/cm² of the electric current density, the voltage was the highest, i.e., 0.4V at 150°C, and was declined as temperature was lowered. This indicates that, as temperature rises, the segmental motion, which is the property of the existing polymer, is increasingly active, and simultaneously the migration of proton is easy.

The polymer electrolyte membrane according to the present invention can provide an excellent mechanical strength, is not deteriorated by heat even at a temperature higher than 100°C, can provide excellent ion conductivity even at non-humidified state, and thus is suitable for a fuel cell for using at a high temperature. When the polymer matrix constituting the polymer electrolyte membrane made of a hydrophobic material is used in the direct methanol fuel cell, the crossover of the methanol can be effectively blocked.

## Claims

1. A polymer electrolyte membrane comprising a porous polymer matrix; and an ion conducting polymer-coating membrane formed in the outer face of a single fiber in the porous polymer matrix, wherein the ion conducting polymer is the product of polymerizing an ion conducting polymeric compound and a crosslinking agent and wherein the polymer electrolyte membrane is obtained by vacuum deposition of a micro particle coating of the ion conducting polymer on individual fibers of a porous polymer matrix to obtain a polymer electrolyte wherein the membrane sterically surrounds the circumference of the individual fibers in the polymer matrix and wherein the pores of the polymer electrolyte membrane are present after coating.

2. The polymer electrolyte membrane according to claim 1, wherein the ion conducting polymeric compound is a monomer or an oligomer, which has, at its terminal end, at least one functional group selected from a sulfonic acid group, a phosphoric acid group, a carboxylic acid group, an imide group, a sulfonimide group, a sulfonamide group and a hydroxy group, and, at its head, an unsaturated bond, and has a weight average molecular weight of less than 10,000 g/mole.

3. The polymer electrolyte membrane according to claim 1 or 2, wherein the ion conducting polymeric compound is at least one selected from a vinyl sulfonic acid, a styrene sulfonic acid, a sulfonyl acrylate, and a vinyl-based monomer having a sulfonic acid at its terminal end.

4. The polymer elertrolyte membrane according to any of claims 1 to 3, wherein the crosslinking agent is at least one selected from a hexyl acrylate, a butyl acrylate, a trimethylolpropane triacrylate, a poly (ethylene glycol) methacrylate, a poly (ethylene glycol) dimethacrylate, an allyl acrylate and a divinyl benzene.

5. The polymer electrolyte membrane according to any of claims 1 to 4, wherein the composition further comprises a plasticizer.

6. The polymer electrolyte membrane according to claim 5, wherein the plasticizer is at least one selected from a poly (ethylene glycol) methyl ether acrylate and a polyallyl ether.

7. The polymer electrolyte membrane according to any of claims 1 to 6, wherein the porous polymer matrix is a porous substrate made of at least one compound selected from a polytetrafluoroethylene, a polyvinylidenefluoride, a polypropylene and a polyethylene.

8. The polymer electrolyte membrane according to any of claims 1 to 7, wherein the thickness of the porous polymer matrix is 10 to 150 µm, and the porosity is 30 to 90%.

9. The polymer electrolyte membrane according to any of claims 1 to 8, wherein the thickness of the coating membrane comprising the ion-conducting polymer formed on the outer face of the single fiber is 1 to 3 µm.

10. A method of preparing a polymer electrolyte membrane which comprises performing vacuum deposition of a micro particle coating on a porous polymer matrix using a composition containing an ion conducting polymeric compound and a crosslinking agent; and polymerizing the resulting product to obtain a polymer electrolyte comprising an ion conducting polymer coating membrane which sterically surrounds the circumference of the individual fibers in the polymer matrix and wherein the pores of the polymer electrolyte membrane are present after coating.

11. The method of preparing a polymer electrolyte membrane according to claim 10, wherein the micro particle coating is performed by flash evaporation method.

12. The method of preparing a polymer electrolyte membrane according to claim 10 or 11, wherein the composition further comprises 0 to 200 parts by weight of a plasticizer based on 100 parts by weight of the ion conducting polymeric compound.

13. The method of preparing a polymer electrolyte membrane according to claim 12, wherein the plasticizer is at least one selected from a poly (ethylene glycol) methyl ether acrylate and a polyallyl ether.

14. The method of preparing a polymer electrolyte membrane according to any of claims 11 to 13, wherein the polymerisation reaction is performed by irradiating light, applying electron beam or applying heat.

15. The method of preparing a polymer electrolyte membrane according to any of claims 10 to 14, wherein the ion conducting polymeric compound is a monomer or an oligomer, which has, at its terminal end, at least one functional group selected from an acidic group selected from a sulfonic acid group, a phosphoric acid group, a carboxylic acid group, and a mixture thereof, an imide group, a sulfonimide group, a sulfonamide group and a hydroxy group, and, at its head, an unsaturated bond, and has the weight average molecular weight of less than 10,000 g/mole.

16. The method of preparing a polymer electrolyte membrane according to any of claims 10 to 15, wherein the ion conducting polymeric compound is at least one selected from a vinyl sulfonic acid, a styrene sulfonic acid, a sulfonyl acrylate, and a vinyl-based monomer having a sulfonic acid at its terminal end.

17. The method of preparing a polymer electrolyte membrane according to any of claims 10 to 16, wherein the crosslinking agent is at least one selected from a hexyl acrylate, a butyl acrylate, a trimethylolpropane triacrylate, a poly (ethylene glycol) methacrylate, a poly (ethylene glycol) dimethacrylate, an allyl acrylate and a divinyl benzene.

18. The method of preparing a polymer electrolyte membrane according to any of claims 12 to 17, wherein the content of the plasticizer is 25 to 300 parts by weight based on 100 parts by weight of the acid group-containing polymeric compound.

19. A fuel cell comprising a cathode; an anode; and the polymer electrolyte membrane which is interposed between the cathode and the anode, and comprises a porous polymer matrix, and an ion conducting polymer coating membrane according to any of claims 1 to 9.

## Patentansprüche

1. Polymerelektrolytmembran umfassend eine poröse Polymermatrix; und eine ionenleitende Polymerbeschichtungsmembran, die auf der äußeren Fläche einer einzelnen Faser in der porösen Matrix gebildet ist, wobei das ionenleitende Polymer das Produkt des Polymerisierens einer ionenleitenden polymeren Verbindung und eines Vernetzungsmittels ist und wobei die Polymerelektrolytmembran durch Vakuumabscheidung einer Mikropartikelbeschichtung des ionenleitenden Polymers auf einzelne Fasern einer porösen Polymermatrix erhalten wird, um ein Polymerelektrolyt zu erhalten, wobei die Membran den Umfang der einzelnen Fasern in der Polymermatrix sterisch umgibt und wobei die Poren der Polymerelektrolytmembran nach dem Beschichten vorliegen.

2. Polymerelektrolytmembran nach Anspruch 1, wobei die ionenleitende polymere Verbindung ein Monomer oder ein Oligomer ist, welches an seinem hinteren Ende wenigstens eine funktionelle Gruppe, ausgewählt aus einer Sulfonsäuregruppe, Phosphorsäuregruppe, Carbonsäuregruppe, Imidgruppe, Sulfonimidgruppe, Sulfonamidgruppe und Hydroxygruppe, und an seinem Kopf eine ungesättigte Bindung aufweist und ein gewichtsgemitteltes Molekulargewicht von weniger als 10000 g/Mol hat.

3. Polymerelektrolytmembran nach Anspruch 1 oder 2, wobei die ionenleitende polymere Verbindung wenigstens eine ist, ausgewählt aus einer Vinylsulfonsäure, Styrolsulfonsäure, einem Sulfonylacrylat und einem Monomer auf Vinylbasis mit einer Sulfonsäure an dessen hinteren Ende.

4. Polymerelektrolytmembran nach einem der Ansprüche 1 bis 3, wobei das Vernetzungsmittel wenigstens eines ist, ausgewählt aus Hexylacrylat, Butylacrylat, Trimethylolpropantriacrylat, Poly(etylenglycol)methacrylat, Poly(ethylenglycol)dimeth-acrylat, Allylacrylat und Divinylbenzol.

5. Polymerelektrolytmembran nach einem der Ansprüche 1 bis 4, wobei die Zusammensetzung ferner einen Weichmacher umfasst.

6. Polymerelektrolytmembran nach Anspruch 5, wobei der Weichmacher wenigstens einer ist, ausgewählt aus Poly(ethylenglycol)methyletheracrylat und Polyallylether.

7. Polymerelektrolytmembran nach einem der Ansprüche 1 bis 6, wobei die poröse Polymermatrix ein poröses Material aus wenigstens einer Verbindung, ausgewählt aus Polytetrafluorethylen, Polyvinylidenfluorid, Polypropylen und Polyethylen ist.

8. Polymerelektrolytmembran nach einem der Ansprüche 1 bis 7, wobei die Dicke der porösen Polymermatrix 10 bis 150 µm beträgt und die Porosität 30 bis 90 %.

9. Polymerelektrolytmembran nach einem der Ansprüche 1 bis 8, wobei die Dicke der Beschichtungsmembran, die das auf der äußeren Fläche einer einzelnen Faser gebildete ionenleitende Polymer umfasst, 1 bis 3 µm beträgt.

10. Verfahren zum Herstellen einer Polymerelektrolytmembran, dass das Vakuumabscheiden einer Mikropartikelbeschichtung auf einer porösen Polymermatrix unter Verwenden einer eine ionenleitende Polymerverbindung und ein Vernetzungsmittel enthaltenden Zusammensetzung umfasst; und das Polymerisieren des resultierenden Produkts, zum Erhalt eines Polymerelektrolyts, umfassend eine ionenleitende Polymerbeschichtungsmembran, die den Umfang der einzelnen Fasern in der Polymerma-trix sterisch umgibt, und wobei die Poren der Polymerlektrolytmembran nach dem Beschichten vorliegen.

11. Verfahren zum Herstellen einer Polymerelektrolytmembran nach Anspruch 10, wobei die Mikropartikelbeschichtung durch ein Flashverdampfungsverfahren durchgeführt wird.

12. Verfahren zum Herstellen einer Polymerelektrolytmembran nach Anspruch 10 oder 11, wobei die Zusammensetzung ferner 0 bis 200 Gewichtsanteile eines Weichmachers, basierend auf 100 Gewichtsanteilen der ionenleitenden polymeren Verbindung, umfasst.

13. Verfahren zum Herstellen einer Polymerelektrolytmembran nach Anspruch 12, wobei der Weichmacher wenigstens einer ist, ausgewählt aus Poly(ethylenglycol)methyl-etheracrylat und Polyallylether.

14. Verfahren zum Herstellen einer Polymerelektrolytmembran nach einem der Ansprüche 11 bis 13, wobei die Polymerisierungsreaktion durch Bestrahlen mit Licht, Anwenden eines Elektronenstrahls oder durch Zuführen von Wärme durchgeführt wird.

15. Verfahren zum Herstellen einer Polymerelektrolytmembran nach einem der Ansprüche 10 bis 14, wobei die ionenleitende Polymerverbindung ein Monomer oder ein Oligomer ist, welches an seinem hinteren Ende wenigstens eine funktionelle Gruppe, ausgewählt aus einer Säuregruppe, ausgewählt aus einer Sulfonsäuregruppe, Phosphorsäuregruppe, Carbonsäuregruppe, und einer Mischung derselben, einer Imidgruppe, Sulfonimidgruppe, Sulfonamidgruppe und Hydroxygruppe, und an seinem Kopf eine ungesättigte Bindung aufweist und ein gewichtsgemitteltes Molekulargewicht von weniger als 10000 g/Mol hat.

16. Verfahren zum Herstellen einer Polymerelektrolytmembran nach einem der Ansprüche 10 bis 15, wobei die ionenleitende polymere Verbindung wenigstens eine ist, ausgewählt aus einer Vinylsulfonsäure, Styrolsulfonsäure, einem Sulfonylacrylat und einem Monomer auf Vinylbasis mit einer Sulfonsäure an dessen hinteren Ende.

17. Verfahren zum Herstellen einer Polymerelektrolytmembran nach einem der Ansprüche 10 bis 16, wobei das Vernetzungsmittel wenigstens eines ist, ausgewählt aus Hexylacrylat, Butylacrylat, Trimethylolpropantriacrylat, Poly(etylenglycol)methacrylat, Poly(ethylenglycol)dimethacrylat, Allylacrylat und Divinylbenzol.

18. Verfahren zum Herstellen einer Polymerelektrolytmembran nach einem der Ansprüche 12 bis 17, wobei der Gehalt an Weichmacher 25 bis 300 Gewichtsanteile, basierend auf 100 Gewichtsanteilen der die Säuregruppe enthaltenden polymeren Verbindung, beträgt.

19. Brennstoffzelle umfassend eine Kathode, eine Anode; und die Polymerelektrolytmembran, die zwischen die Kathode und die Anode eingefügt ist, und die eine poröse Polymermatrix und eine ionenleitende Polymerbeschichtungsmembran nach einem der Ansprüche 1 bis 9 umfasst.

## Revendications

1. Membrane à électrolyte polymère comprenant une matrice polymère poreuse ; et une membrane de revêtement polymère conducteur d'ions formée dans la face extérieure d'une simple fibre dans la matrice polymère poreuse, dans laquelle le polymère conducteur d'ions est le produit de polymérisation d'un composé polymère conducteur d'ions et d'un agent de réticulation et dans laquelle la membrane à électrolyte polymère est obtenue par dépôt sous vide d'un revêtement à microparticules du polymère conducteur d'ions sur des fibres individuelles d'une matrice polymère poreuse pour obtenir un électrolyte polymère, dans laquelle la membrane entoure stériquement la circonférence des fibres individuelles dans la matrice polymère et dans laquelle les pores de la membrane à électrolyte polymère sont présents après revêtement.

2. Membrane à électrolyte polymère selon la revendication 1, dans laquelle le composé polymère conducteur d'ions est un monomère ou un oligomère, qui a, au niveau de son extrémité terminale, au moins un groupe fonctionnel sélectionné parmi un groupe acide sulfonique, un groupe acide phosphorique, un groupe acide carboxylique, un groupe imide, un groupe sulfonimide, un groupe sulfonamide et un groupe hydroxy, et, au niveau de sa tête, une liaison insaturée, et a un poids moléculaire moyen pondéral inférieur à 10 000 g/mole.

3. Membrane à electrolyte polymère selon 1a revendication 1 ou 2, dans laquelle le composé polymère conducteur d'ions est au moins un élément sélectionné parmi un acide vinylsulfonique, un acide styrène sulfonique, un acrylate de sulfonyle et un monomère à base de vinyle ayant un acide sulfonique au niveau de son extrémité terminale.

4. Membrane à électrolyte polymère selon l'une quelconque des revendications 1 à 3, dans laquelle l'agent de réticulation est au moins un élément sélectionné parmi un acrylate d'hexyle, un acrylate de butyle, un triacrylate de triméthylolpropane, un méthacrylate de poly(éthylène glycol), un diméthacrylate de poly(éthylène glycol), un acrylate d'allyle et un divinylbenzène.

5. Membrane à électrolyte polymère selon l'une quelconque des revendications 1 à 4, dans laquelle la composition comprend en outre un plastifiant.

6. Membrane à électrolyte polymère selon la revendication 5, dans laquelle le plastifiant est au moins un élément sélectionné parmi un acrylate d'éther méthylique de poly(éthylène glycol) et un éther polyallylique.

7. Membrane à électrolyte polymère selon l'une quelconque des revendications 1 à 6, dans laquelle la matrice polymère poreuse est un substrat poreux constitué d'au moins un composé sélectionné parmi un polytétrafluoroéthylène, un polyfluorure de vinylidène, un polypropylène et un polyéthylène.

8. Membrane à électrolyte polymère selon l'une quelconque des revendications 1 à 7, dans laquelle l'épaisseur de la matrice polymère poreuse est de 10 à 150 µm, et la porosité est de 30 à 90 %.

9. Membrane à électrolyte polymère selon l'une quelconque des revendications 1 à 8, dans laquelle l'épaisseur de la membrane de revêtement comprenant le polymère conducteur d'ions formée sur la face extérieure de la simple fibre, est de 1 à 3 µm.

10. Procédé de préparation d'une membrane à électrolyte polymère qui comprend la réalisation d'un dépôt sous vide d'un revêtement à microparticules sur une matrice polymère poreuse utilisant une composition contenant un composé polymère conducteur d'ions et un agent de réticulation ; et la polymérisation du produit résultant pour obtenir un électrolyte polymère comprenant une membrane de revêtement polymère conducteur d'ions qui entoure stériquement la circonférence des fibres individuelles dans la matrice polymère et dans lequel les pores de la membrane à électrolyte polymère sont présents après revêtement.

11. Procédé de préparation d'une membrane à électrolyte polymère selon la revendication 10, dans lequel le revêtement à microparticules est effectué par un procédé d'évaporation flash.

12. Procédé de préparation d'une membrane à électrolyte polymère selon la revendication 10 ou 11, dans lequel la composition comprend en outre 0 à 200 parties en poids d'un plastifiant sur la base de 100 parties en poids du composé polymère conducteur d'ions.

13. Procédé de préparation d'une membrane à électrolyte polymère selon la revendication 12, dans lequel le plastifiant est au moins un élément sélectionné parmi un acrylate d'éther méthylique de poly(éthylène glycol) et un éther polyallylique.

14. Procédé de préparation d'une membrane à électrolyte polymère selon l'une quelconque des revendications 11 à 13, dans lequel la réaction de polymérisation est effectuée en irradiant de la lumière, en appliquant un faisceau d'électrons ou en appliquant de la chaleur.

15. Procédé de préparation d'une membrane à électrolyte polymère selon l'une quelconque des revendications 10 à 14, dans lequel le composé polymère conducteur d'ions est un monomère ou un oligomère, qui a, au niveau de son extrémité terminale, au moins un groupe fonctionnel sélectionné parmi un groupe acide sélectionné parmi un groupe acide sulfonique, un groupe acide phosphorique, un groupe acide carboxylique, et un de leurs mélanges, un groupe imide, un groupe sulfonimide, un groupe sulfonamide et un groupe hydroxy, et, au niveau de sa tête, une liaison insaturée, et a un poids moléculaire moyen pondéral inférieur à 10 000 g/mole.

16. Procédé de préparation d'une membrane à électrolyte polymère selon l'une quelconque des revendications 10 à 15, dans lequel le composé polymère conducteur d'ions est au moins un élément sélectionné parmi un acide vinylsulfonique, un acide styrène sulfonique, un acrylate de sulfonyle et un monomère à base de vinyle ayant un acide sulfonique au niveau de son extrémité terminale.

17. Procédé de préparation d'une membrane à electrolyte polymère selon l'une quelconque des revendications 10 à 16, dans lequel l'agent de réticulation est au moins un élément sélectionné parmi un acrylate d'hexyle, un acrylate de butyle, un triacrylate de triméthylolpropane, un méthacrylate de poly(éthylène glycol), un diméthacrylate de poly(éthylène glycol), un acrylate d'allyle et un divinylbenzène.

18. Procédé de préparation d'une membrane à électrolyte polymère selon l'une quelconque des revendications 12 à 17, dans lequel la teneur en plastifiant est de 25 à 300 parties en poids sur la base de 100 parties en poids du composé polymère contenant un groupe acide.

19. Pile à combustible comprenant une cathode ; une anode ; et la membrane à électrolyte polymère qui est interposée entre la cathode et l'anone, et comprend une matrice polymère poreuse, et une membrane de revêtement polymère conducteur d'ions selon l'une quelconque des revendications 1 à 9.
